# EUROPEAN PATENT APPLICATION

(11) **EP 4 834 754 A1**
(43) Date of publication of application: **04.11.2026**
(21) Application number: 25275030.2
(22) Date of filing: 30.04.2025
(51) Int. Cl.: B64C 17/06, B64U 10/14, B64U 50/19

(54) **FLIGHT CONTROL SYSTEM FOR AN AIRCRAFT**

(71) Applicant: BAE SYSTEMS plc, London SW1Y 5AD (GB)
(72) Inventor: HOLLIDAY, Gareth Alun, Frimley, GU16 7EX (GB)
(74) Representative: BAE SYSTEMS plc Group IP Department

(57) **Abstract**

The present invention relates to a novel flight control system and method for controlling an aircraft, and specifically for a multicopter (100) such as a quadcopter or the like. The flight control system and method are adapted to control a motor engaged with a non-lift generating body (200) so as to either rotate or translate the at least one non-lift generating body around either a substantially vertical axis, or along at least one horizontal axis, so as to affect at least one of the yaw, pitch or roll of the aircraft (100).

## Description

The present invention relates to a novel flight control system for an aircraft, and in particular, a flight control system for a multicopter such as a quadcopter or the like.

### BACKGROUND

Unlike helicopters, multicopters (i.e. rotorcraft with three or more lift-generating rotors) typically employ fixed-pitch rotor blades. Instead of adjusting the pitch of the rotors (or employing other flight control surfaces), multicopter control is achieved by varying the relative speed of each rotor; thus varying the lift, thrust and torque produced at each.

Multicopters (especially unpiloted drones or unmanned aerial vehicles "UAVs") are increasingly being used to transport items and/or personnel, and larger aircraft with more powerful motors are necessary to accommodate heavier payloads. However, a multicopter carrying a payload (especially one close to its maximum carrying capacity) may necessitate operating all lift-generating rotors at their maximum rotational speed (i.e. producing maximum thrust) just to stay in the air and maintain vertical altitude. Under these conditions, it may be impossible to either increase the speed of any rotor further, or, to reduce power to any one or more other rotors all-whilst maintaining the vertical altitude of the aircraft.

The present invention seeks to address this limitation by providing an alternative flight control system to control the yaw, pitch or roll of an aircraft, without dependence upon adjusting the rotational speed of the lift-generating rotors.

### SUMMARY OF INVENTION

In one example of the present invention, there is provided a flight control system for an aircraft. The system comprises a controller, at least one moveable non-lift generating body, and a motor configured to engage with the at least one non-lift generating body. The controller is adapted to control the motor so as to rotate the at least one non-lift generating body around a substantially vertical axis, so as to affect the yaw of the aircraft. This is achieved by spinning the at least one non-lift generating body, generating a rotational torque in the body, and a counter torque in the aircraft, and thus the direction of the aircraft (i.e. the yaw) may be altered without varying the speed of the lift-generating rotors. Alternatively, or in combination with the above, the motor may translate the at least one non-lift generating body along at least one substantially horizontal axis, so as to affect the pitch and/or roll of the aircraft. This is achieved by varying the centre of mass of the aircraft, and moving the body unbalances the aircraft, causing it to lean or tilt, thus the level of the aircraft may be altered without varying the speed of the lift-generating rotors.

In one example, the non-lift generating body is a releasable securing and attachment means for a detachable payload. Rotation of the payload attachment means also rotates any attached payload, and thus the control system can use the rotation of the attachment means (and to a greater extent, the rotation of any payload) to affect a counter rotation in the aircraft, without resorting to varying the speed of the lift-generating rotors. Preferably, the releasable attachment means is configured to suspend the detachable payload below the aircraft.

In another example, the non-lift generating body is a battery for the aircraft. By using the battery as a yaw-generating rotating body, rotation of the aircraft can be achieved without resorting to varying the speed of the lift-generating rotors.

In another example of the invention, there is provided an aircraft comprising any of the flight control systems as described above. Preferably the aircraft is a multicopter, i.e. it comprises at least three lift generating rotors, each rotatable around a substantially vertical axis. Preferably still the aircraft is a quadcopter.

In another example, there is provided a method for controlling an aircraft. In a first step, the method comprises receiving a control signal for an aircraft. The control signal is interrogated and a determining is made as to whether or not the received signal comprises an instruction to alter at least one of the pitch, roll and yaw of the aircraft. In response to a determination the received signal does comprises an instruction to alter the yaw of the aircraft, the method involved instructing a controller to control a motor to rotate a non-lift generating body around a substantially vertical axis, in the opposite direction as to the desired yaw. This generates a rotational torque in the body, and a counter torque in the aircraft, and thus the direction of the aircraft (i.e. the yaw) may be altered without varying the speed of the lift-generating rotors.

Alternatively, or in addition to the above, in response to a determination the received signal comprises an instruction to alter the pitch or roll of the aircraft, the method involves instructing the controller to control a motor so as to translate at least one non-lift generating body along at least one substantially horizontal axis, in the direction of the desired pitch or roll of the aircraft. This shifts the centre of mass of the aircraft, and moving the body unbalances the aircraft, causing it to lean or tilt, thus the level of the aircraft may be altered without varying the speed of the lift-generating rotors.

Preferably, the method also involves determining whether the aircraft is encumbered by a releasable payload. In response to a determination that the aircraft is encumbered by a releasable payload, then the control method as described above is employed. Should there the aircraft not be determined to be carrying a payload, then the aircraft may be controlled in a traditional manner, e.g. by controlling the speed of the rotors.

### DRAWINGS

The present invention will now be described, by way of example only, with reference to the accompanying drawings, in which:
Figures 1a, 1b, 1c and 1d show a top-down and rear-on view of an example multirotor aircraft as known in the art;
Figures 2a and 2b are schematic diagrams of a system according to the present invention, and an example aircraft incorporating the same;
Figures 3a and 3b show a top-down and rear-on view of a first example of the invention;
Figures 4a and 4b show a top-down and rear-on view of a second example of the invention;
Figures 5a and 5b show a top-down and rear-on view of a third example of the invention; and
Figures 6a, 6b, 7 and 8 are flowcharts of example methods according to the invention.

In the drawings, wherever appropriate, like parts are denoted by like reference signs.

### DETAILED DESCRIPTION OF THE INVENTION

### THE PRIOR ART

An aircraft with rotary wings that spin around a vertical axis to generate lift, for example a helicopter, is called rotorcraft. A "multirotor" or "multicopter" is a rotorcraft with three or more lift-generating rotors, and the names *"tricopter", "quadcopter", "hexacopter"* and *"octocopter"* are often used to refer to 3, 4, 6 and 8-rotor rotorcraft, respectively.

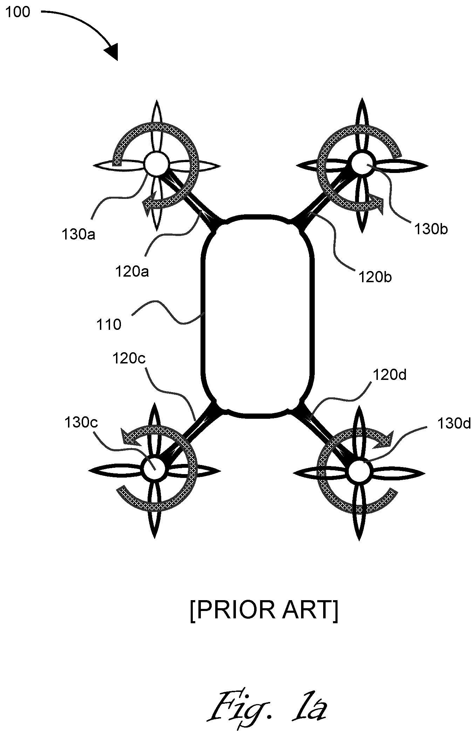

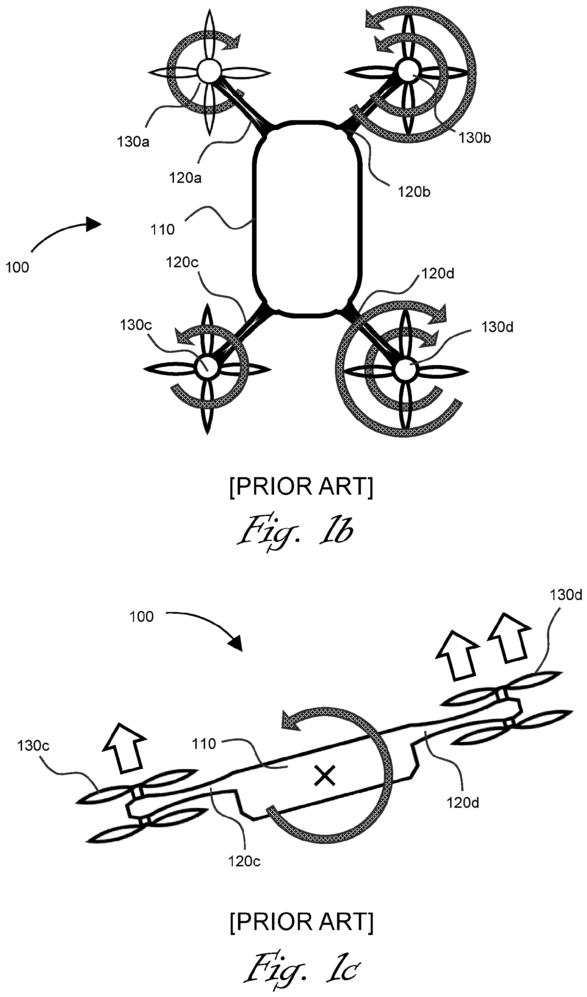

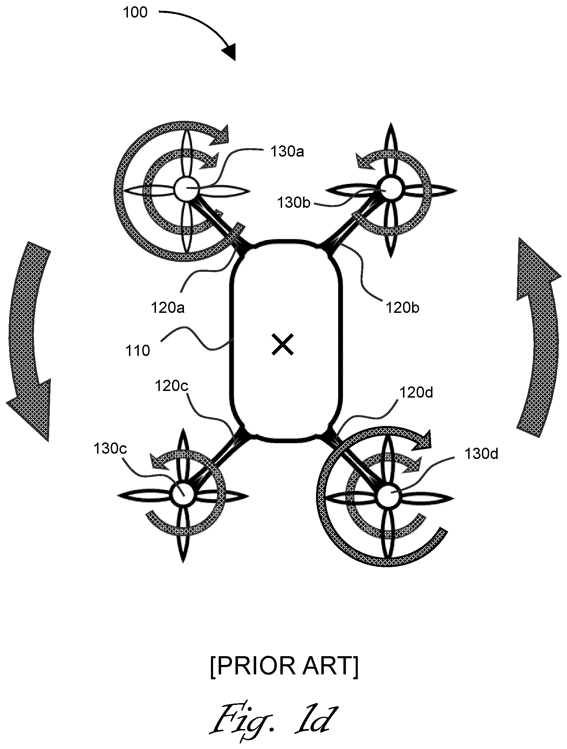

**Figures 1a-1d** show an example multicopter 100 as known in the prior art. Figures 1a, 1b and 1d are represent a top-down view of the multicopter 100 wherein the nominal front of the aircraft is depicted as being at the top of the figure, and the rear of the aircraft is toward the bottom of the figure. Figure 1c is a rear-end view of the aircraft 100, looking forwards.

The example aircraft shown is a quadcopter which comprises a fuselage 110, four arms 120a, 120b, 120c, 120d extending out substantially horizontal from the fuselage 110, and a lift-generating rotor 130a, 130b, 130c, 130d (rotatable about a vertical axis) at the end of each arm respectively. Whilst in the example shown the arms 120a, 120b, 120c, 120d extend out from the centre of the fuselage 110 angled away from each other, there are of course other possible configurations; e.g. the arms 120a, 120b, 120c, 120d each being substantially parallel to each other.

As shown in Figure 1a, maintaining or adjusting (either positively or negatively) the vertical altitude of the example multicopter 100, all-whilst keeping the aircraft level, requires generating equal lift (i.e. vertical thrust) at each rotor 130a, 130b, 130c, 130d. This is illustrated by the equivalent rotational arrows at each rotor. However it will be appreciated by the skilled person that in other configurations, the aircraft may allow or require generating different levels of thrust at one or more rotors in order to keep the aircraft level, e.g. for a non-symmetrical rotor layout.

For rotors of a similar size and configuration (as is typical), equal thrust is produced by equal speed of rotation. However, where the rotors comprise different sizes or configurations (e.g. the number of rotor blades, or the pitch of the rotor blades) to each other, different rotational speeds may at each rotor in order to produce the same amount of thrust as each other. For the purposes of the following examples, it is assumed that each of the four rotors 130a, 130b, 130c, 130d are of similar size and configuration. Therefore equal lift is generated at each rotor by rotating the rotors at the same speed to each other.

If the upward thrust produced by the lift-generating rotors 130a, 130b, 130c, 130d is maintained at an "equilibrium" level, i.e. equal and opposite to the downward weight of the aircraft 100, then the aircraft 100 will hover and maintain its vertical altitude. If the thrust of the rotors 130a, 130b, 130c, 130d is increased (equally at each rotor) above this equilibrium level, then the aircraft 100 will rise, i.e. increase its altitude. If the thrust of the rotors 130a, 130b, 130c, 130d is decreased (equally at each rotor) below the equilibrium level, then the aircraft 100 will descend, i.e. decrease its altitude.

Beyond adjusting the vertical altitude of an aircraft (i.e. moving up and down a vertical axis), in-flight movement is typically defined in three dimensions:
i) yaw (wherein the aircraft rotates left or right about a vertical axis);
ii) pitch (wherein the aircraft tilts up or down about a horizontal axis running from side-to-side); and,
iii) roll (where in the aircraft tilts left of right about a horizontal axis running from the front to rear of the aircraft).

As shown in Figures 1b and 1c, a multicopter 100 may adjust its pitch or roll (i.e. its horizontal alignment) by generating more thrust or lift (by adjusting the rotational speed) at one or more rotors on one side of the aircraft than at the rotor(s) opposite, thus unbalancing the aircraft from the level position and causing it to tilt in a desired direction. In the examples shown, increased thrust is illustrated by double arrows, and the two right side lift-generating rotors 130b, 130d are controlled so as to produce more lift than the two left side rotors 130a, 130c. In this scenario the aircraft 100 will roll or tilt sideways, to the left, and a vector component of the thrust generated by the rotors will drive the aircraft 100 sideways, whilst facing the same direction (i.e. not rotating about a vertical axis). This is also the mechanism by which a multicopter is driven forwards, by first tilting the aircraft in the desired direction of travel and then increasing thrust from the rotors so as to both counter the reduction in the vertical lift component of the thrust owing to the change in angle, and increase the horizontal component of the thrust to increase travelling speed.

Typically in multicopters, at least one of the lift-generating rotors will rotate in the opposite direction to the others. In order to keep the aircraft facing in the same direction, the rotors are controlled so as to maintain an overall equal torque (i.e. rotational force) on the aircraft. Yaw control of a multicopter aircraft (i.e. rotation around the vertical axis) is typically achieved by adjusting the rotational speed of the lift-generating rotors to generate more torque in those rotors rotating in one particular direction than those rotating in the opposite direction; thus producing an overall rotational effect. As illustrated in the examples shown, opposite paired rotors typically turn in the same direction (i.e. front left 130a and right rear 130d are rotating clockwise; front right 130b and left rear 130c are rotating anticlockwise), and adjacent rotors turn in opposite directions. As shown in Figure 1d, if a first pair of rotors 130a, 130d are controlled so as to rotate faster (illustrated by double arrows) than the second pair 130b, 130c, then their increased torque on the body produces yaw, i.e. a spinning effect around a vertical axis. The yaw of a multicopter 100 may thus be controlled by adjusting the rotational speed of the rotors 130a, 130b, 130c, 130d to generate more torque at the rotors rotating in a particular direction than those rotating in the opposite direction. Owing to the conservation of angular momentum, if the torque in the clockwise rotors 130a, 130d is increased, the aircraft 100 will begin to rotate anticlockwise, and vice versa.

In order to counteract the increased vertical thrust generated at the first pair of rotors 130a, 130d, the rotational speed of the second pair of rotors 130b, 130c is reduced. This further increases the overall rotational torque, and the yaw effect.

It is also known in the art to employ coaxial rotors, wherein each arm comprises two rotors - typically one above and one below the arm. The two rotors located on a single arm may be configured to rotate in opposite directions to each other (one facing up and one facing down), which cancels out rotational torque on a given arm. The individual rotors on each arm may be independently driven (i.e. rotated at different speeds) and thus yaw control is achievable by varying the speed of the rotors in one direction to be greater or lower than the speed of the rotors in the opposite direction.

### THE INVENTION

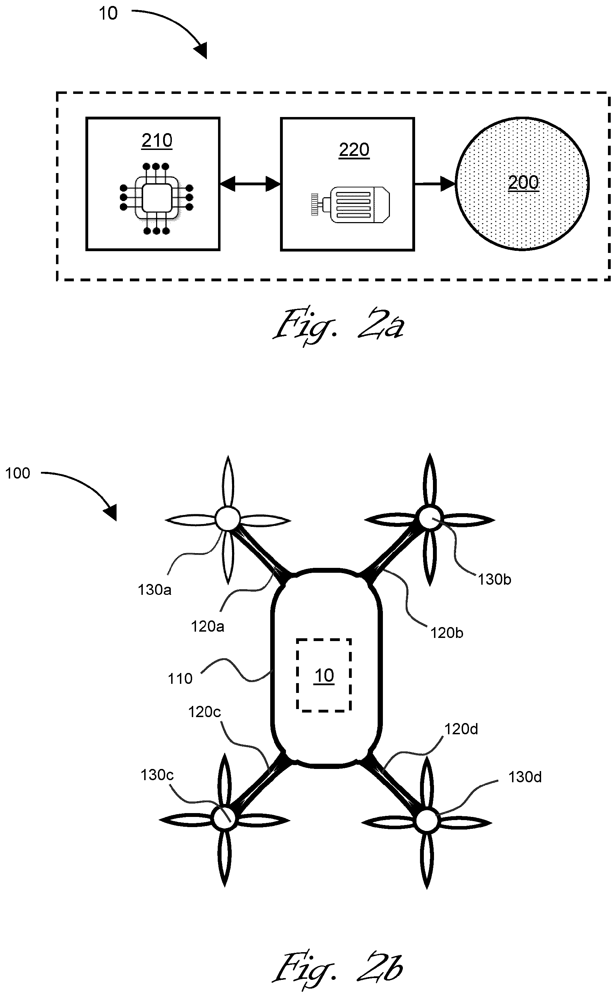

**Figure 2a** is a schematic diagram of an example flight control system 10 according to the present invention. The flight control system 10 comprises a controller 210, and a motor 220. There is also provided at least one moveable, non-lift generating mass or body 200. The motor 220 is coupled with and configured to move (i.e. translate or rotate) the non-lift generating body or mass 200. The motor 220 is also coupled with the controller 210.

**Figure 2b** shows an example aircraft 100 according to the present invention. In this example, the aircraft 100 is a quadcopter having a fuselage 110, four rotor arms 120a, 120b, 120c, 120d, and a rotor 130a, 130b, 130c, 130d located at the end of each rotor arm. Each rotor 130a, 130b, 130c, 130d has a corresponding rotor motor (not shown) housed within the end of each rotor arm, and the individual rotor motors are controlled by an on-board controller unit (not shown). The aircraft 100 also comprises the flight control system 10 as described above. In some examples, the moveable body 200 is entirely housed withing the fuselage 110 of the aircraft 100. In other examples, the moveable body 200 may be partly or wholly located outside of the aircraft fuselage 110. Unlike the rotors 130a, 130b, 130c, 130d, the moveable body does not provide aerodynamic lift to the aircraft 100.

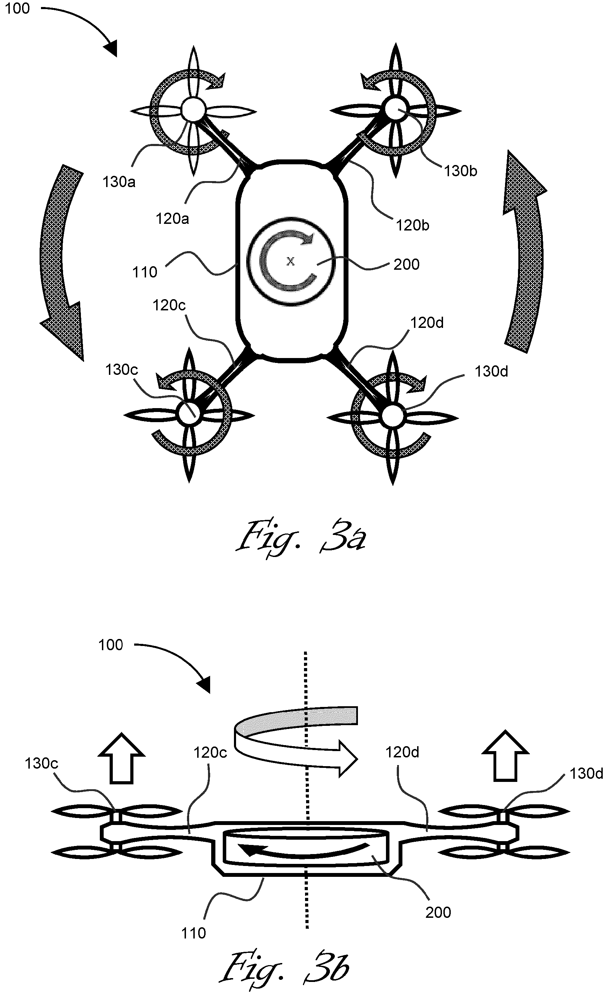

**Figures 3a and 3b** show an example of using the moveable body 200 in order to control the yaw (i.e. rotation about a vertical axis) of the aircraft 100. In the examples shown, the moveable body 200 is mounted within the fuselage 110 so as to be rotatable around a vertical axis "x". The controller 210 provides control instructions to the motor 220 to engage with and drive the movable body 200 so as to rotate it about the vertical axis. The (non-lift generating) moveable body 200 may be driven by the motor 220 through any number of appropriate means, for example rollers, belts, axles, or cogs etc. The motor 220 may be separate to, or incorporated within, the moveable body 200. The aircraft controller 210 is adapted to control the direction and rotational speed of the motor 220, and therefore the direction and rotational speed of the (non-lift generating) moveable body 200, so as to produce a rotational torque on (and a thus a reactionary rotation by) the aircraft 100. If the (non-lift generating) moveable body 200 were to be rotated clockwise (when viewed from above) the aircraft 100 will begin to rotate anticlockwise, and vice versa. It is this rotational effect which is typically countered by the tail rotor on a helicopter. Stopping the rotation or (or disengaging the motor coupling to) the moveable body reduces stops the yaw effect.

In a preferred example, the controller 210 may be provided with information in order to calibrate and control the speed at which the motor 220 rotates the moveable body 200 in order to yaw the aircraft 100 as desired. The information my comprise at least one of: the mass of the aircraft 100; the mass of the moveable body 200; and the shape of the moveable body 200.

In a preferred example, the centre of mass of the (non-lift generating) moveable body 200 is substantially aligned with its vertical rotational axis so that when the movable body 200 is spinning or rotated, the aircraft 100 does not become unbalanced and wobble. Preferably, the (non-lift generating) moveable body 200 is also rotationally symmetrical in shape about the vertical axis, and preferably still, exhibits circular symmetry around the vertical axis. In a preferred example the moveable body 200 is a cylinder or disk.

In one example, the moveable body 200 comprises a battery, and the aircraft 100 draws electrical power from the battery, e.g. for powering the rotor motor(s) or other onboard systems (not shown). In a preferred example, the battery is a removable article, so may be swapped-out to enable charging or replacement. In order to draw electrical power from a (potentially) rotating body, a slip ring may be employed, which allows transmission of electrical power and signals from a stationary to a rotating structure. As the battery is rotated within the fuselage 110, the aircraft 100 may still continue to draw power from it.

The rotating moveable body 200 may be held in place by any number of appropriate means which allow the body to rotate (under control of the controller 210 and driven by the motor 220) whilst being secured within the fuselage 110 of the aircraft 100. For example, the movable body 200 may comprise an indentation or recess in at least one of the top or bottom sides. Preferably, the indentation or recess is located in line with the centre of the vertical axis of rotation. The fuselage 110 may comprise a corresponding bulge, flange or projection on which the moveable body 200 is mounted or held in place. In one example, the body 200 is an annular disc having a central cavity extending through height of the body along the vertical rotation axis, and the fuselage 110 comprises a corresponding vertical axle which serves to hold the moveable body 200 in place as it rotates.

In tandem with rotating the (non-lift generating) body 200, the controller 210 may also adjust the speed of the lift generating rotors 130a, 130b, 130c, 130d to provide more or less thrust and manoeuvre the aircraft 100 as desired. However, yaw control of the aircraft 100 may be achieved independently of the need to necessarily adjust the speed of the lift generating rotors 130a, 130b, 130c, 130d, or perhaps in combination therewith. Therefore, even when the aircraft 100 is burdened by an increased weight, e.g. a payload, and the rotors 130a, 130b, 130c, 130d are required to operate at close to their maximum speed in order to simply maintain vertical altitude, yaw control of the aircraft 100 may still be achieved by control and rotation of the moveable body 200.

Where the aircraft 100 comprises only one (non-lift generating) moveable body 200, then it is desirable that the body (and the driving motor 220) is rotatable in both directions, so as to provide the ability to yaw the aircraft 100 in both clockwise and anticlockwise directions (when viewed from above).

However, in some examples there may be provided more than one (non-lift generating) moveable body 200. Where the aircraft 100 comprises more than one (non-lift generating) moveable body 10, each (non-lift generating) moveable body may be adapted to rotate either in both directions, or, perhaps only one direction. **In** the case that each (non-lift generating) moveable body 200 can only rotate in one direction, then it is desirable that there is provided at least one (non-lift generating) moveable body adapted to rotate in each direction (i.e. at least one clockwise and at least one anticlockwise spinning body) so as to provide the ability to yaw the aircraft 100 in both the anticlockwise and clockwise directions.

In one example where there are provided at least two (non-lift generating) moveable bodies, the controller may instruct the motor(s) to rotate the bodies in opposite directions (e.g. one clockwise, the other anticlockwise), the torque from one body cancelling out the torque generated by the other. In this scenario it is possible to control the yaw effect on the aircraft 100 by slowing down (or stopping) one of the already moving bodies 200.

In the preferred examples shown in Figures 3a and 3b, the (non-lift generating) moveable body 200 may be located substantially in the centre of the aircraft fuselage 110 when viewed from above. However, there may be examples wherein at least one of the (non-lift generating) rotatable bodies 200 is offset from the centre, for example toward the front or the rear of the aircraft 100. In other examples the (non-lift generating) moveable body 200 may be located within the rotor arms 120a, 120b, 120c, 120d housing the lift generating propellers 130a, 130b, 130c, 130d. The non-lift generating body 200 may employ the same motor as the lift generating propellers to change their rotational speed when located in the arms of the aircraft 100.

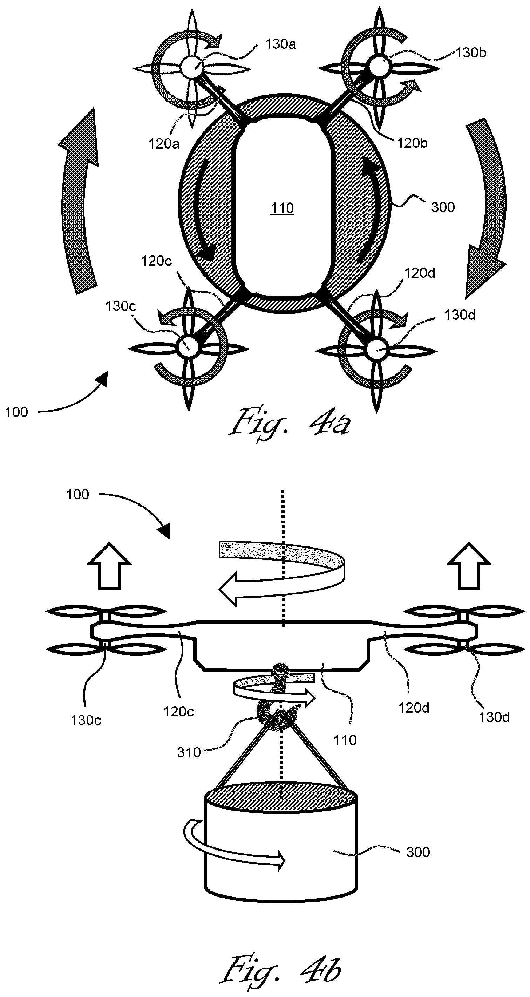

**Figures 4a and 4b** show another example of the present invention, wherein the aircraft 100 is adapted to carry a detachable payload 300. In the example shown, the payload 300 is suspended beneath the aircraft 100, and is releasably attached via a load bearing attachment means 310, for example a hook, carabiner, magnet, or clasp, etc. The load bearing attachment means 310 secures the payload to the aircraft 100 for transport.

In the example shown, the attachment means 310 is rotatable about a substantially vertical axis with refence to the fuselage 110 of the aircraft 100. There is also provided a controller and associated motor. The controller is coupled to the motor, and the motor is adapted to engage with and rotate the attachment means 310, and thus the suspended payload 300. The attachment means 310, and to a greater extent the payload 300, is thus employed as the (non-lift generating) moveable body as described above, in order to control the yaw of the aircraft 100. As the attachment means 310 and payload 300 are rotated in one direction (e.g. anticlockwise when viewed from above) the aircraft 100 experiences a counter torque and rotates in the opposite direction (e.g. clockwise when viewed from above). The attachment means 310, and any payload 300, may be controlled in the same manner as described above.

In other examples, the payload 300 may be mounted on top of the aircraft 100, but still provided with a controller and motor to drive rotation by any suitable means e.g. on a rotatable platform.

The controller 210 may be pre-programmed with (or instructions provided to, perhaps over the air) information about the shape, dimensions and weight of the payload 300 so that the controller can calibrate the rate of rotation and/or power delivered to the rotating motor for the attachment means 310 to achieve the desired rate of rotation (e.g. yaw) of the aircraft 100. Differently shaped and weighted payloads will necessitate different rotational speeds and motor power to achieve the same rotational speed of the aircraft. As an example, a broadly disc-shaped payload 300 will have a greater rotational inertia than a vertical narrow rod of the same mass, and therefore require greater power to be provided to the motor in order to rotate the payload 300 (via the attachment means 310) and achieve the desired rotational speed. In one example, the load bearing attachment means 310 incorporates (or is coupled to) a weighting sensor adapted to measure the weight of any payload, and the controller 210 is adapted to receive payload weight information from the load bearing attachment means 310.

In one example, the controller 210 is adapted to rotate the load bearing attachment means 310 (and thus the payload 300) only when the payload 300 is attached, and thus burdened with extra weight. The controller 210 may also be adapted to revert to traditional control, i.e. by adjusting the speed of the rotors 130a, 130b, 130c, 130d when the payload 300 is not attached, and the aircraft 100 is unburdened by extra weight.

In another example, the controller 210 is adapted to revert to traditional control system when the weight of the payload is under a predetermined percentage (e.g. 90%) of the maximum carrying threshold for the aircraft 100, or otherwise rotate the load bearing attachment means 310 (and thus the payload 300) when the payload is greater than or equal to the predetermined percentage (e.g. 90%) of the maximum carrying threshold for the aircraft 100.

In another example, yaw control may be achieved by both the traditional control system (i.e. by adjusting the speed of the rotors) and by rotating the load bearing attachment means 310 (and the payload 300) at the same time. However, the power contribution by each system to the rotational control of the aircraft 100 may be adjusted depending on the weight of the payload 300. For example, if there is no payload attached to the aircraft 100, or the payload 300 is under a predetermined first percentage (e.g. 10%) of the maximum carrying capacity, then the controller 210 employs the traditional control system (i.e. by adjusting the speed of the rotors) to control the yaw of the aircraft. If the weight of the payload 300 is greater than a second predetermined percentage (e.g. 90%) of the maximum carrying threshold for the aircraft 100, then yaw control is achieved by rotating the load bearing attachment means 310 (and the payload 300). If the weight of the payload 300 is between the first and second predetermined percentages (e.g. 10%-90%) of the maximum carrying threshold for the aircraft 100, then yaw control of the aircraft 100 is achieved through a combination of both the traditional control system (i.e. by adjusting the speed of the rotors) and by rotating the load bearing attachment means 310 (and the payload 300) at the same time. In a preferred example, the power contribution of each method may be scaled according to the weight of the payload 300 within the first and second predetermined percentages. For example, if the weight of the payload was 70% of the of the maximum carrying threshold for the aircraft 100, then the controller may control the yaw of the aircraft by employing a lower power input (e.g. 25%) from the traditional control system (i.e. by adjusting the speed of the rotors) and a higher power input (e.g. 75%) from the novel system as described above.

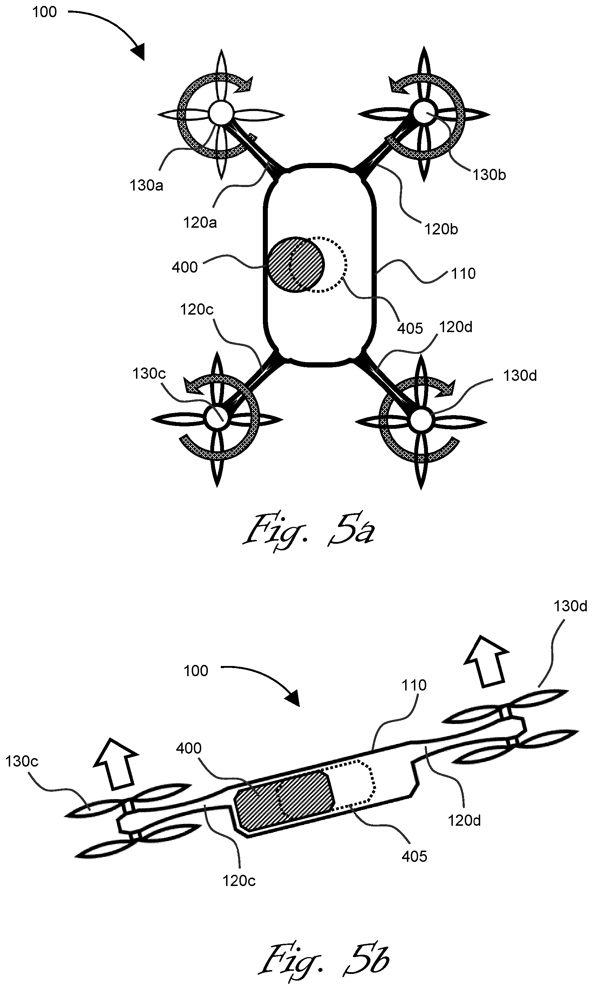

**Figures 5a and 5b** show another example of the invention, wherein there is provided an aircraft 100 (being a quadcopter) having a fuselage 110, four rotor arms 120a, 120b, 120c, 120d, and a rotor 130a, 130b, 130c, 130d at the end of each rotor arm. Each rotor 130a, 130b, 130c, 130d has a corresponding motor (not shown) housed within the end of each rotor arm, and the motors are controlled by an on-board controller unit (not shown).

There is also provided a movable (non-lift generating) body 400 which is translatable (i.e. moveable) along at least one substantially horizontal axis, i.e. forward, backward, left or right as viewed from above. The moveable body 400 may be engaged with, and driven by, a motor to translate its position within the fuselage 110, and there is provided a controller to control the motor and thus the position of the body 400 relative to the fuselage 110 of the aircraft 100. The motor may translate the position of the body 400 within the fuselage 110 by any appropriate means, for example (but not limited to) along rails, rollers, or via a cable pulley system. By translating the horizontal position of the body 400 within the fuselage 110 of the aircraft, the centre of mass of the aircraft 100 is altered, and without adjusting the speed of (and thrust developed by) rotors, then the aircraft will "lean" in the direction that the body 400 has been relocated/translated to. As shown in the example of Figures 5a and 5b, the moveable body 400 has been translated from its original position (shown as a dotted outline 405) in the centre of the fuselage 110, to a position toward the left-hand side of the fuselage 110, causing the aircraft 100 to tilt or roll to the left. Since the aircraft 100 is no-longer level, the resultant thrust vector of the rotors will result in the aircraft traversing to the left. This is achieved without adjusting the rotational speed of any of the rotors. Therefore, an alternate control method of the aircraft is achieved by adjusting the horizontal position of the (non-lift generating) body 400 with respect to the fuselage 110.

In line with the other examples discussed above, in some examples the (non-lift generating) body 400 is a battery for the aircraft 100. The battery may be arranged in such a way that power is transmitted to the aircraft no matter where the battery is located within the fuselage of the aircraft. For example, the battery may be moved along rails which may also transfer power from the battery to the motors of the lift-generating rotors.

In another example, the (non-lift generating) body 400 may be a detachable payload located outside of the fuselage, e.g. suspended beneath the aircraft or mounted atop the fuselage. The attachment means for the payload (whether it be a hook, carabiner, magnet, clasp or mounting platform etc.) may be moveable along at least one horizontal axis, therefore adjusting the horizontal position of the payload with respect to the fuselage. Adjusting the horizontal position of the attachment means, (and therefore the detachable payload) will adjust the weight distribution of the aircraft, resulting in a pitch or roll effect in the aircraft. It is anticipated that only a small translation of the payload attachment means with respect to the fuselage of the aircraft is required in order to achieve a suitable amount of tilt by which to control the aircraft lean and direction of travel.

In one example, the (non-lift generating) body may be both translatable (along at least one horizontal axis) and rotatable (around a vertical axis), thus providing pitch, roll and yaw control for the aircraft (independent of adjusting the speed of the rotors). Alternatively, the aircraft 100 may comprise more than one (non-lift generating) body; wherein there is provided at least one rotatable body and at least one translatable body for pitch, roll and yaw control.

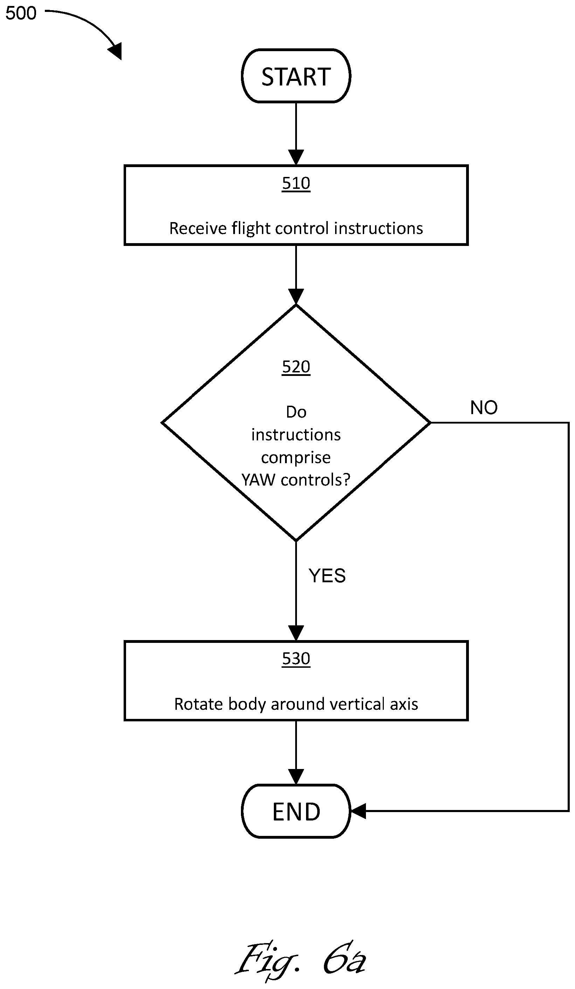

**Figure 6a** shows an example method 500 of controlling an aircraft according to the present invention. In a first step 510 the method 500 involves receiving flight control instructions for an aircraft. In a second step 520, the method determines whether the flight control instructions comprise any yaw control instructions. In a third step 530, in response to determining that the flight control instructions comprise yaw control instructions, the method involves rotating a (non-lift generating) body around a vertical axis, thus providing yaw control for the aircraft.

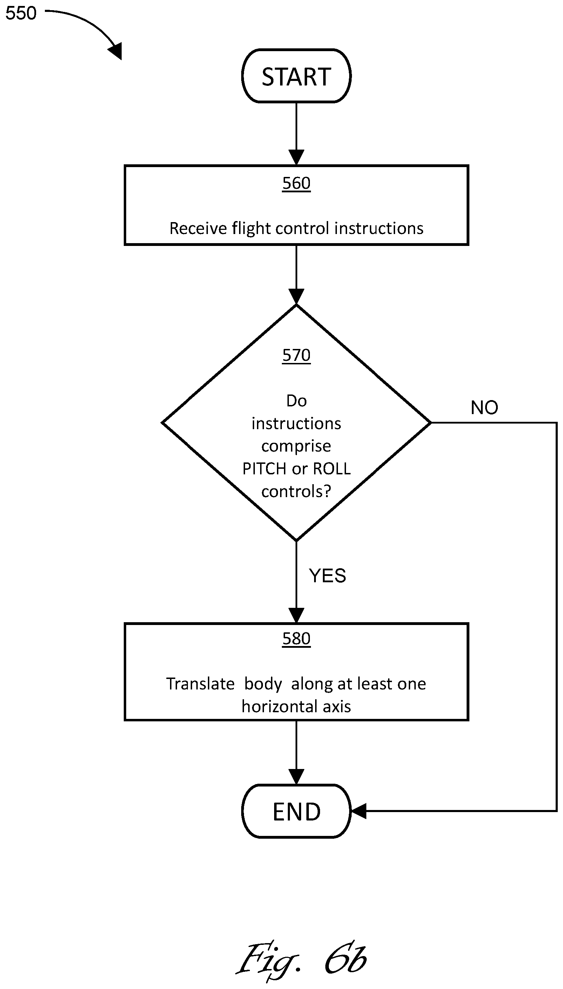

**Figure 6b** shows an example method 550 of controlling an aircraft according to the present invention. In a first step 560 the method 550 involves receiving flight control instructions for an aircraft. In a second step 570, the method determines whether the flight control instructions comprise any pitch or roll control instructions. In a third step 580, in response to determining that the flight control instructions comprise pitch or roll control instructions, the method involves translating a (non-lift generating) body along at least one horizontal axis in the direction of the desired pitch or roll of the aircraft, thus providing pitch and roll control for the aircraft.

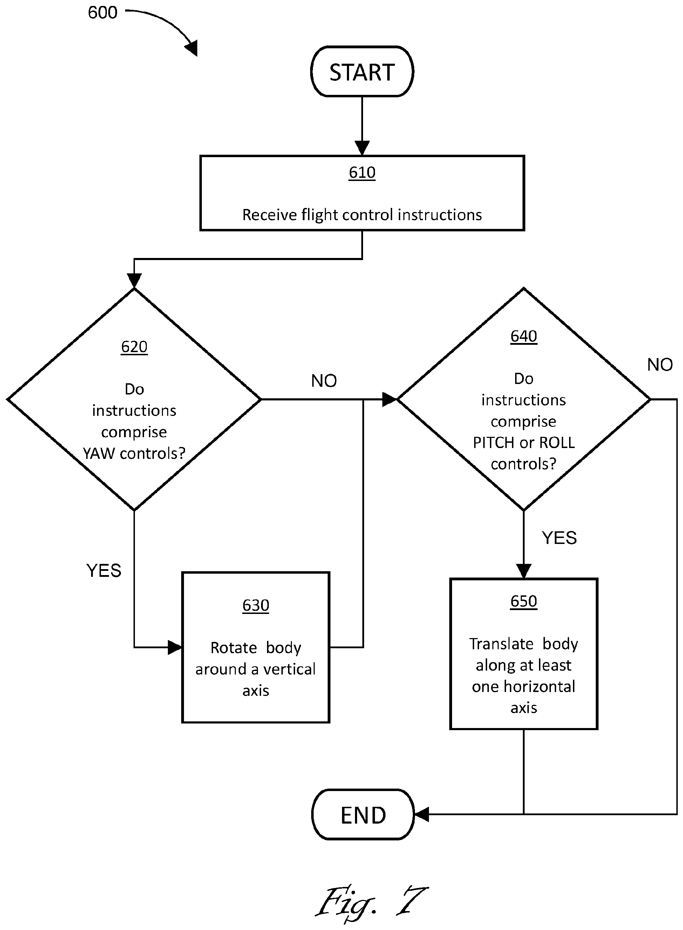

**Figure 7** shows an example method 600 of controlling an aircraft according to the present invention. In a first step 610 the method 600 involves receiving flight control instructions for an aircraft. In a second step 620, the method determines whether the flight control instructions comprise any yaw control instructions. In a third step 630 in response to determining that the flight control instructions comprise yaw control instructions, the method involves rotating a (non-lift generating) body around a vertical axis, thus providing yaw control for the aircraft. In a fourth step 640 the method 600, the method determines whether the flight control instructions comprise any pitch or roll control instructions. In a fifth step 650, in response to determining that the flight control instructions comprise pitch or roll control instructions, the method involves translating a (non-lift generating) body along at least one horizontal axis in the direction of the desired pitch or roll of the aircraft, thus providing pitch and roll control for the aircraft.

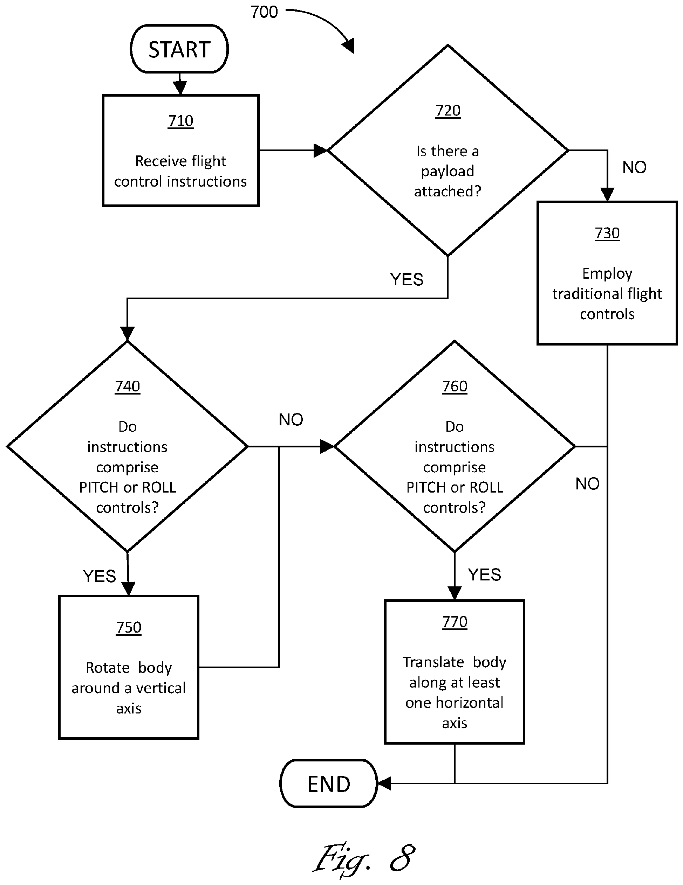

**Figure 8** shows an example method 700 of controlling an aircraft according to the present invention. In a first step 710 the method 700 involves receiving flight control instructions for an aircraft. In a second step 720, the method determines whether or not the aircraft is encumbered by a releasable payload. In a determination that there is no payload attached or carried by the aircraft, then in a next step 730 normal flight controls are employed for the aircraft in order to affect the flight control instructions. In some examples, there may be a predetermined weight threshold that must exceed in order to be recognised as a payload for the purposes of this method. This threshold may relate to the maximum carrying capacity of the aircraft, e.g. 70% of maximum payload weight.

In a determination that there is a payload attached, then in a next step 740, the method determines whether or not the flight control instructions comprise any yaw control instructions. In a next step 750 in response to determining that the flight control instructions comprise yaw control instructions, the method involves rotating a (non-lift generating) body around a vertical axis, thus providing yaw control for the aircraft. In a next step 760 the method 700, the method determines whether the flight control instructions comprise any pitch or roll control instructions. In a next step 770, in response to determining that the flight control instructions comprise pitch or roll control instructions, the method involves translating a (non-lift generating) body along at least one horizontal axis in the direction of the desired pitch or roll of the aircraft, thus providing pitch and roll control for the aircraft.

Whilst the present invention has been explained with reference to examples of a quadcopter, it will be appreciated by the person skilled in the art that the invention is equally applicable to other aircraft, for example multicopters with any number (three or more) of rotors.

In most of the examples described herein it is assumed that the individual rotors are of a similar size and configuration, and therefore the rotors will generate a similar amount of thrust at a similar speed. However, it will be appreciated by the person skilled in the art that a variety of rotor sizes and configurations may be used on the aircraft, potentially requiring different speeds to generate the same amount of lift.

Whilst the invention has been described by way of the example embodiments above, it will be understood by the skilled person that any combination of the features, unless explicitly described as being mutually exclusive to each other, may be used in combination with each other, as appropriate.

## Claims

1. A flight control system for an aircraft, the system comprising:
a controller;
at least one moveable non-lift generating body; and
a motor configured to engage with the at least one non-lift generating body,
wherein the controller adapted to control the motor so as to:
rotate the at least one non-lift generating body around a substantially vertical axis, so as to affect the yaw of the aircraft; and/or
translate the at least one non-lift generating body along at least one substantially horizontal axis, so as to affect the pitch and/or roll of the aircraft.

2. The system according to claim 1, wherein the non-lift generating body is a releasable attachment means for a detachable payload.

3. The system according to claim 2, wherein the releasable attachment means is configured to suspend the detachable payload below the aircraft.

4. The system according to any preceding claim, wherein the non-lift generating body is a battery.

5. An aircraft comprising the flight control system according to any preceding claim.

6. The aircraft according to claim 5, wherein the aircraft comprises at least three lift generating rotors, each rotatable around a substantially vertical axis.

7. The aircraft according to claim 6, wherein the aircraft is a quadcopter.

8. A method for controlling an aircraft, the method comprising:
receiving a control signal for an aircraft;
determining whether the received signal comprises an instruction to alter at least one of the pitch, roll and yaw of the aircraft;
in response to a determination the received signal comprises an instruction to alter the yaw of the aircraft, instructing a controller to control a motor to rotate a non-lift generating body around a substantially vertical axis, in the opposite direction as to the desired yaw; and/or,
in response to a determination the received signal comprises an instruction to alter the pitch or roll of the aircraft, instructing the controller to control a motor so as to translate at least one non-lift generating body along at least one substantially horizontal axis, in the direction of the desired pitch or roll of the aircraft.

9. The method according to claim 8, further comprising:
determining whether the aircraft is encumbered by a releasable payload; and,
in response to a determination that the aircraft is encumbered by a releasable payload, controlling at least one of the pitch, roll or yaw of the aircraft in the manner described by claim 8.
